# EUROPEAN PATENT APPLICATION

(11) **EP 1 142 482 A1**
(43) Date of publication of application: **10.10.2001**
(21) Application number: 00610033.3
(22) Date of filing: 04.04.2000
(51) Int. Cl.: A23C 9/13, A23C 19/055

(54) **Method for manufacturing a cultured dairy product containing exogenously added protein**

(71) Applicant: Nutri Pharma ASA, 0116 Oslo (NO)
(72) Inventor: Nadland, Karl Johan, 3400 Lier (NO)
(74) Representative: Kjerrumgaard, Bent

(57) **Abstract**

The present invention relates to cultured dairy products containing exogenously added protein and optionally exogenously added dietary fibres and methods for preparation thereof. The methods comprise the steps of i) hydrating a protein source by subjecting it to shear forces and if necessary to heat in the presence of excess of water, ii) adding the hydrated protein source from step i) to a milk composition, iii) adding a fermentation culture to the mixture from step ii), and iv) fermenting to obtain a cultured dairy product. The shear forces are preferably applied by use of a homogenizer at a temperature of 80°C. The exogenously added proteins are preferably soy proteins and the exogenously added dietary fibres are preferably soy fibres, more preferably soy cotyledon fibres. The cultured dairy products preferably contain exogenously added protein in an amount of at least 5 weight percent.

## Description

### FIELD OF THE INVENTION

The present invention concerns methods for manufacturing cultured dairy products containing exogenously added protein and also concerns cultured dairy products containing exogenously added protein.

### BACKGROUND OF THE INVENTION

The field of functional foods has increased tremendously in recent years as the health awareness of the population in the industrialized parts of the world has gone up coincident with an increase in lifestyle related syndromes such as obesity, cardiovascular diseases and type 2 diabetes. Several studies show a significant correlation between the diet of a subject and the risk of the subject of contracting one or more of these diseases and syndromes. This has put the spotlight on the healthiness of everyday diet and as research into the field continues many items are added to the group of ingredients that should be present in a healthy diet. Functional foods can be defined as ordinary food items, which include one or more ingredients that can be beneficial to human health in one way or another. Functional foods can for instance be diary products, such as cultured dairy products.

Intake of soy protein, either alone or in combination with other soybean components, has been shown to have several beneficial effects on humans. Naturally, the soy protein could be consumed by eating soybeans, but this has little appeal, as soybeans are conceived by some to have an objectionable flavour and furthermore are not part of a traditional diet in the Western world. An alternative way of consuming soy protein is as part of a functional food product containing soy protein. An example of a desirable functional food product may be a cultured dairy product, such as a yoghurt or a fermented yoghurt-like product. These products do not require any cooking on the part of the consumer and can be eaten as they are.

However, until now there has been an upper limit as to how much exogenous protein the cultured dairy product can contain without for example the flavour, texture, mouthfeel, taste and/or fermentation time being adversely affected. When manufacturing a well-fermented dairy product, such as for instance a yoghurt, with a low pH value, all the major components (excluding for instance flavourings) is preferably added before the addition of the bacterial culture and attempts to incorporate soy protein into yoghurt in increased amounts by use of the current techniques will result in precipitation of soy proteins with free calcium ions of milk and with lactic acid produced during the fermentation, giving a product with undesirable texture and mouthfeel. Such attempts have also resulted in a prolonged fermentation time.

The Ca²⁺ ions in milk is believed to cause precipitation of proteins including exogenously added proteins by cross-linking to their ionized carboxyl or phosphoseryl groups at neutral or alkaline pH. Calcium proteinates are usually sparingly soluble and often gel when heated and the presence thereof in a cultured dairy product is very undesirable and should definitely be avoided. The concentration of Ca²⁺ in milk is approximately 30 mmol/l, of which only 2 mol/l are present as free calcium ions as the calcium ions in milk can be bound either by protein or be what is known as diffusable calcium ions. The diffusable calcium ions in turn can either be complexed with phosphates present in the milk or be present as the free calcium ions. Equilibriums exist between the calcium ions bound by protein and the free calcium ions as well as between the free calcium ions and the calcium ions complexed with phosphates. These equilibriums are shifted as the free calcium ions are removed from the milk, for instance by crystallization with exogenously added proteins, or by other means. The shift in equilibriums liberates more calcium ions, which all in all can make up to 15 mmol/l calcium ions available for crystallization with for instance exogenously added proteins.

US 4.066.792 concerns a method of producing soybean milk yoghurt. The soybeans are soaked in water at 20-30°C for about 8-24 hours (an amount of 3 to 5 parts water per part soybean). Then the soaked soybeans are treated with 0.1-1.0% sodium bicarbonate at ∼70-100°C for 5-20 minutes using 5-15 parts sodium bicarbonate solution per part soybean, blended and treated with ultrasound to produce a soybean milk. The soybean milk is then mixed with 0-3% milk whey solids, heated to 90-121°C for 10-20 minutes followed by rapid cooling. A solution of gelatine is added prior to the fermentation, which takes place for 16-24 hours using two strains of *Lactobaccilus acidophilus.* The soybean milk is described as having a protein content of 3.6%. It follows that the protein content of the end product will then be less than 3.6%.

US 4.797.289 concerns a method of preparing a cultured dairy product by pasteurizing or heat treating a base mixture containing milk as the primary ingredient, cooling the mixture and fermenting the mixture to obtain a product with an increased amount of viable bacteria. It also describes adding fibres to the base mixture to enhance the growth of the bacteria and to obtain a diary product with significant amounts of dietary fibres. The claimed methods provide a cultured dairy product with a content of dietary fibre of 0.1-3.0 weight percent. Nothing is mentioned about the addition of exogenous protein.

US 5.147.668 concerns a process for the production of a solid, dried product, which is reconstitutable by saliva, which process comprises homogenizing, heating, cooling and fermenting an aqueous mixture of milk or a milk product and carbohydrates followed by several steps to obtain the solid, dried product. It is stated that the aqueous mixture can include milk products enriched with soy protein. According to the examples, one of the initial steps of this process is a homogenization step comprising preheating of the aqueous mixture containing milk products and optionally soy protein at 60°C followed by homogenization with 200 bar. There is no description of any treatment of the soy protein prior to the addition thereof to the aqueous mixture containing milk products.

EP 0.486.738 concerns a method for the production of a milk-fermented food, which method comprises addition of isolated soy protein to a medium comprising milk at a time just prior to the fermentation in order to obtain a lower fermentation time. The growth of bacteria proceeds remarkably fast and generation of acids is also accelerated by the addition of the isolated soy protein. The isolated soy protein is not treated prior to being added to the medium. The isolated protein is added in amounts up to 7.0 weight percent. It is stated that when the isolated soy protein is added at 4.8 weight percent, the concentration thereof in the final food product is 1.5 weight percent. It is stated that adding larger amounts of soy protein will not improve the growth accelerating effect but will result in a characteristic soybean odour in certain kinds of product. The inventors also suggest adding the soy protein after the fermentation and recommends that the isolated soy protein is added in an amount of about 0.1 to 1.5 weight percent as the addition of higher amounts will result in a product with a characteristic soybean odour.

US 5.017.387 concerns a process for preparing yoghurt compositions using from 30 to 85 percent soy milk. Whole soybeans are soaked in water for 12-18 hours at room temperature with 3 parts water to one part soybean. After this, the soaked soybeans are blanched for 10-25 minutes at 90-95 °C and then milled to produce soy milk with a soy protein content of 3.1 to 3.6 percent. This soy milk is mixed with cow's milk, ewe's milk or other suitable milk and then pasteurized at preferably 85-95°C under high pressure, cooled and finally fermented. Appropriate times for the fermentation is stated to be from 5 to 10 hours with 5 to 6 hours being preferred.

EP 0.741.975 concerns a process for producing yoghurt suitable for use in baking, which process comprises fermenting a cream mix comprising among others 2-15 weight percent of a protein component selected among milk, skimmed milk powder, milk proteins derived, for example, from whey protein and various vegetable proteins or combinations thereof. The cream mix is subjected to fermentation for 10 hours after for example pasteurization at 90°C for 5 minutes, homogenization at 100 bar and cooling.

US 4.971.810 concerns a method of preparing fibre enriched yoghurt, which method comprises preparing a base mixture comprising milk and a fibre source, such as soy fibre, pasteurizing and homogenizing the base mixture followed by cooling and fermenting. This method results in the production of yoghurts with a fibre content of up to 6 grams of fibre per 8 ounces, which corresponds to approximately 0.02 g/ml or 2.5%.

It has now been found that it will be possible to incorporate higher amounts of protein, such as 7-8 weight percent, optionally in conjunction with dietary fibres, into cultured dairy products, such as yoghurt or yoghurt-like products, by use of a new process as described below. The amount of protein, which a cultured dairy product can contain, can thereby be increased with up to 50 percent.

In view hereof, it is an object of the present invention to provide a cultured dairy product, such as a yoghurt or a yoghurt-like product, containing at least 5 weight percent of exogenously added protein, while retaining a smooth texture and avoiding soy odour.

### SUMMARY OF THE INVENTION

The present invention provides a method for manufacturing a cultured dairy product containing exogenously added protein which method involves hydrating the protein by subjecting it to shear forces, preferably in combination with heating, prior to fermentation. The present invention also provides a cultured dairy product having a smooth texture and comprising exogenously added, completely hydrated protein.

Intake of a protein enriched cultured dairy product prepared by a method according to the present invention will provide any beneficial effects associated with the exogenously added proteins, but in a smaller volume than would be required with intake of cultured dairy products prepared by use of previously available methods for protein fortification of cultured dairy products.

In one aspect, the present invention provides a method for manufacturing a cultured dairy product containing exogenously added protein which method comprises the steps of
i) hydrating a protein source by subjecting it to shear forces, and if necessary to heat, in the presence of excess of water,
ii) adding the hydrated protein source from step i) to a milk composition,
iii) adding a fermentation culture to the mixture from step ii), and
iv) fermenting to obtain a cultured dairy product.

In another aspect, the present invention provides a cultured dairy product prepared by a method according to the present invention.

In yet another aspect, the present invention provides a cultured dairy product having a smooth texture and comprising exogenously added, completely hydrated protein in an amount of from about 5 to 25 weight percent, and optionally exogenously added dietary fibres.

In yet another aspect, the present invention provides the use of a cultured dairy product having a smooth texture and comprising exogenously added soy protein in an amount of from about 5 to 25 weight percent, and exogenously added soy fibres for lowering serum levels of LDL-cholesterol.

The exogenously added protein may be any type of protein including dairy proteins or any combination of proteins and may consequently be provided by any protein source or by a combination of protein sources. Examples of exogenously added proteins in the context of the present invention are vegetable proteins, such as soy proteins, and animal proteins. The exogenously added protein is preferably non-dairy protein and more preferably soy protein. The soy protein is preferably provided by isolated soy protein, soy protein concentrate, soy flour or the like or any combination thereof. The soy protein is preferably provided by isolated soy protein.

Isolated soy protein is the major proteinacious fraction of soybeans. It is prepared from high quality, dehulled, defatted soybeans by removing a preponderance of the non-protein components resulting in an isolated soy protein fraction which shall contain at least 80 percent protein on a moisture free basis. Soy protein concentrates are made by removing most of the oil and water-soluble non-protein constituents from defatted and dehulled soybeans. In the present context a soy protein concentrate shall preferably contain at least 65 percent protein on a moisture-free basis. The soy protein may also be provided by soy flour, which may be full-fat or defatted soy flour. Full-fat soy flour comes from whole, dehulled soybeans that have been ground into a fine powder and, as the name implies, still contains the fat naturally found in soybeans. Defatted soy flour comes from whole, dehulled, defatted soybeans that have been ground into a fine powder. Soy flour contains approximately 50 percent protein on a dry weight basis in the present context.

Preferred isolated soy protein products are supplied by Protein Technologies International, Inc. under the brand name of SUPRO®. SUPRO® isolated soy proteins are supplied in many different qualities and SUPRO® XT 12C, SUPRO® PLUS 159 and SUPRO® PLUS 161 are the presently preferred qualities. SUPRO® PLUS 161 has a higher content of soy protein than SUPRO® PLUS 159 (87.3% in SUPRO® PLUS 161 compared to 80% in SUPRO® PLUS 159) and might give a bit more soy flavour in the cultured dairy product, but has less powdery feeling in itself and reduces fermentation times compared with SUPRO® PLUS 159 and is thus the most preferred quality. The source of the exogenously added protein may also be a mixture of any of the protein sources mentioned above.

A protein source for use in step i) of a method according to the present invention comprises the source or sources of exogenously added proteins. The amount of protein in a protein source for use in step i) of a method according to the present invention and the amount of the protein source is preferably such that the amount of exogenously added protein in the resulting cultured dairy product is at least about 5 weight percent, such as at least about 6 weight percent, for example at least about 7 weight percent, such as at least about 8 weight percent, for example at least about 9 weight percent, such as at least about 10 weight percent, for example at least about 11 weight percent, such as at least about 12 weight percent.

Optionally, a protein source for use in step i) of a method according to the present invention also comprises dietary fibres. Examples of dietary fibres comprised in a protein source for use in step i) of a method according to the present invention include fibres from apples, oats, and soybeans. The dietary fibres are preferably provided by soybean fibres, and more preferably by soy cotyledon fibres. Preferred soy cotyledon fibre products are supplied by Protein Technologies International, Inc. under the brand name of FIBRIM®. Among the various soybean fibres produced under the FIBRIM® brand, FIBRIM® 1020 and FIBRIM® 2000 are particularly preferred in the present invention. These two products also contain soy protein in an amount of 12.4% and 13.3%, respectively. The manufacturers recommend FIBRIM® 2000 if a powdery mouth feel is to be avoided. FIBRIM® 1020 is another quality of cotyledon fibres, which in our independent studies contributed less to a powdery mouth feel than FIBRIM® 2000.

The amount of dietary fibres in a protein source for use in step i) of a method according to the present invention may preferably vary from 0 to about 40 weight percent based on the weight of the protein.

Preferably, the amount of protein and the amount of dietary fibres in a protein source for use in step i) of a method according to the present invention and the amount of said protein source is such that the resulting cultured dairy product has a content of exogenously added protein of about 9 weight percent and a content of exogenously added dietary fibres of about 2.25 weight percent.

A protein source for use in step i) of a method according to the present invention may also optionally comprise carbohydrate sources, fat sources, flavouring agents, vitamins, minerals, electrolytes, trace elements and other conventional additives and the like. If a fat source is present in a protein source for use in step i) of a method according to the present invention, a preferred fat source is lecithin, especially soy lecithin. When lecithin, or soy lecithin, is present in a protein source for use in step i) of a method according to the present invention, it is usually present in an amount of from about 0.5 to 10 weight percent, preferably from about 2.5 to 6 weight percent of the total protein source.

Preferred examples of protein sources for use in step i) of a method according to the present invention are the compositions described in WO 97/31546, which are hereby incorporated by reference. Said patent application discloses compositions comprising (a) isolated soy protein, (b) soybean fibres, preferably soy cotyledon fibres, the amount of (a) being such that the protein content provides at least 15% of the total energy content of the composition, and the weight ratio between (a) and (b) being at least 2, preferably at least 3. These compositions are useful for lowering serum levels of cholesterol and triglycerides and for increasing the HDL/LDL-cholesterol ratio in subjects and for treating obesity.

Additionally preferred examples of protein sources are the compositions described in PCT/IB99/01992, PCT/IB99/01997 and PCT/IB99/01998. Said patent applications disclose compositions comprising (a) a soy protein source, selected from isolated soy protein, soy protein concentrate, or soy flour, of which isolated soy protein is most preferred, said soy protein source providing an amount of soy protein, which is at least 45 weight percent of the total protein content of the composition, preferably at least 50 weight percent of the total protein content of the composition, said total protein content providing at least 15 percent of the total energy content of the composition, (b) at least one phytoestrogen compound in an amount of more than 0.10 weight percent of the soy protein content of the composition, and (c) dietary fibres, preferably soybean fibres, more preferably soy cotyledon fibres, in an amount of more than 4 weight percent of the total weight of the composition on a dry basis. These compositions are particularly useful for lowering serum levels of total cholesterol, LDL-cholesterol, triglycerides, homocystein, reducing the influx of cholesterol and/or triglycerides into the arterial wall, reducing the amount of oxidized LDL-cholesterol present in the arterial wall, increasing the serum HDL/LDL-cholesterol ratio and/or the serum level of HDL-cholesterol in a subject, including a diabetic subject, reducing and/or eliminating mucus hypersecretion and/or dyspnea in a subject suffering from asthma and/or increasing FEV1 of a subject as measured by forced expiratory volume in the first second of expiration. An example of these compositions is shown to be able to lower serum levels of *inter alia* LDL-cholesterol with as much as 13%. These compositions may therefore be effective in preventing, treating, prophylactically treating and/or alleviating diseases such as cardiovascular diseases, type 2 diabetes, cardiovascular diseases in diabetics, the metabolic syndrome and pulmonary diseases as described in said applications.

One embodiment of the present invention provides methods by use of which the above-mentioned compositions may be incorporated into cultured dairy products in amounts, which methods result in cultured dairy products with increased amounts of exogenously added soy protein. Another embodiment of the present invention provides cultured dairy products into which these compositions are incorporated. Intake of such a cultured dairy product according to the present invention will provide the beneficial effects associated with said compositions in a lesser volume than would be required if said composition were incorporated into cultured dairy products by use of previously available methods for protein fortification of cultured dairy products.

One aspect of the present invention provides the use of cultured dairy products as described in the above paragraph for lowering serum levels of glucose and/or total cholesterol and/or LDL-cholesterol and/or triglycerides and/or homocystein and/or for increasing serum levels of HDL-cholesterol and/or the serum HDL/LDL-cholesterol ratio in a subject.

The milk ingredients in a milk composition for use in step ii) of a method according to the present invention may for instance be provided by cream, whole milk, partially skimmed milk, skimmed milk, reconstituted non-fat dairy milk, cream powder, whole milk powder, partially skimmed milk powder, skimmed milk powder and/or combinations thereof. A milk composition for use in step ii) of a method according to the present invention preferably contains a combination of milk and milk powder, such as for example a combination of skimmed milk and skimmed milk powder. The amount of milk powder added to the liquid milk may preferably be such that it can make up for the dilution that takes place when a hydrated protein source is added to the milk composition in step ii) of a method according to the present invention. The milk ingredients of a milk composition for use in step ii) of a method according to the present invention seem to contribute to a better taste of the resulting cultured dairy product as it helps in masking any soy taste that might otherwise be present. The milk ingredients of a milk composition for use in step ii) of a method according to the present invention should be present in an amount which is sufficient to ensure that the resulting cultured dairy product contains at least about 2 g, preferably from about 5 to about 5.5 g of milk ingredients (dry matter) per 100 g of cultured dairy product.

A milk composition for use in step ii) of a method according to the present invention may also comprise other ingredients, such as water, stabilizers and for instance soy milk.

A milk composition for use in step ii) of a method according to the present invention may also contain a water soluble calcium ion binder such as a salt selected from the group comprising sodium or potassium citrate, sodium or potassium phosphate, or sodium or potassium hexametaphosphate, or a combination of these, whereof sodium hexametaphosphate is most preferred. A preferred sodium hexametaphosphate is supplied by Ellis & Everand, Bradford, UK, under the brand name Calgon®. Sodium citrate, potassium citrate, sodium phosphate, potassium phosphate or a combination thereof is preferably present in a milk composition for use in step ii) of a method according to the present invention in an amount of from 0 to about 0.2 weight percent, preferably in an amount of about 0.1 weight percent of the cultured dairy product. Sodium hexametaphosphate or potassium hexametaphosphate or a combination thereof is preferably present in a milk composition for use in step ii) of a method according to the present invention in an amount of from 0 to about 0.15 weight percent, preferably in an amount of from about 0.08 to about 0.10 weight percent of the cultured dairy product. The presence of a calcium ion binder in a milk composition for use in step ii) of a method according to the present invention ensures that fewer free calcium ions are available for precipitation with exogenously added proteins. For the purpose of the present invention up to 15 mmol/l of the calcium ions in milk may be bound by a calcium ion binder.

To improve the smooth texture of a cultured dairy product prepared by a method according to the present invention, it is advantageous that the mixture to be fermented also contains a thickening agent such as agar-agar, gum arabic or pectin, or any combination thereof, preferably a combination of agar-agar and pectin or a combination of agar-agar and gum arabic, and even more preferred a combination of agar-agar and pectin. The pectin should preferably be a mixture of amidated low ester and high ester pectin. A preferred type of pectin is GENU® pectin type LM-107 AS-YA from Hercules Copenhagen, DK GENU® pectin type LM-107 AS-YA, which is a mixture of amidated low ester and high ester pectin extracted from citrus peel and standardized by addition of sucrose. Gum arabic, pectin and/or agar-agar may be added at any stage prior to fermentation, but are preferably added to the milk composition to improve hydration of the proteins in step i) by keeping the thickening agents from competing with the proteins in the binding of water. Gum arabic and pectin should each be added in an amount sufficient to ensure that gum arabic and/or pectin will be present in the cultured dairy product in an amount of from about 0.08 to about 1.0 weight percent, preferably about 0.25 weight percent, whereas agar-agar should be added in an amount sufficient to ensure that it will be present in the cultured dairy product in an amount of from about 0.005 to about 0.15 weight percent, preferably about 0.06 weight percent. Gum arabic may for instance be added to the protein source for use in step i) of a method according to the present invention in an amount of for instance about 1.1 weight percent of the combined water and protein source, but is preferably added to a milk composition for use in step ii) of a method according to the present invention in an amount of for instance about 1.4 weight percent. Pectin may for instance be added to a milk composition for use in step ii) of a method according to the present invention in an amount of for instance about 1.15 weight percent. Agar-agar may for instance be added to a protein source for use in step i) of a method according to the present invention in an amount of for instance about 0.1 weight percent of the combined water and protein source, but is preferably added to a milk composition for use in step ii) of a method according to the present invention in an amount of for instance about 0.3 weight percent of the milk composition. For example, pectin are added to a milk composition for use in step ii) of a method according to the present invention in an amount of about 1.15 weight percent of the milk composition along with agar-agar in an amount of about 0.28 weight percent of the milk composition, which affords a cultured dairy product containing about 0.25 weight percent pectin and about 0.06 weight percent agar-agar. The addition of gum arabic, pectin or agar-agar or a combination thereof will *inter alia* provide for a cultured dairy product with a smoother texture especially in combination with a homogenization following the fermentation in step iv) as described below.

The term "cultured dairy product" as used throughout the present specification and the appended claims shall be taken to mean a product comprising dairy ingredients which product has been treated by way of fermentation. A cultured dairy product may also comprise any number of non-dairy ingredients. Cultured dairy products include, but are not limited to, yoghurts, yoghurt-like products, buttermilk, cream cheese and sour cream and similar products. Flavourings, jams, herbs and such like may be added to a cultured dairy product after fermentation. When amounts in the present specification and the appended claims are stated in relation to a cultured dairy product, this shall be taken to mean in relation to a cultured dairy product before any such addition unless otherwise stated.

The terms "exogenously added protein" and "exogenously added dietary fibres" as used throughout the present specification and the appended claims shall be taken to mean protein or dietary fibres which are not part of a milk composition for use in step ii) of a method according to the present invention as such, but which ends up in the cultured dairy product by virtue of having been added to or being among or present in the starting materials or the intermediate products in a process for manufacturing said cultured dairy product, in this case for instance the protein source for use in step i) of a method according to the present invention. This should not be taken to mean that for instance exogenously added protein may not be of dairy origin or that exogenously added protein may not be of a kind that is also part of a milk composition for use in step ii) of a method according to the present invention.

The term "protein source" as used throughout the present specification and the appended claims shall be taken to mean a composition comprising protein. For the purpose of the present invention, a protein source may be the source of any number of proteins of any origin. The term itself shall provide no limitations as to the amount of protein present in the protein source and a protein source for use in step i) of a method according to the present invention may additionally comprise any number of non-protein components.

The term "hydration", in this case of proteins, as used throughout the present specification and the appended claims shall be taken to mean a process by which water molecules are forced around and in between different structural moieties of the individual protein molecules and in between polypeptide chains to such a degree, that it is substantially impossible to "squeeze" any additional water molecules into the close proximity of the protein molecule. The term "hydrated", in this case protein, as used throughout the present specification and the appended claims shall be taken to mean a protein that has undergone hydration or is present in a state of hydration.

The term "milk composition" as used throughout the present specification and the appended claims shall be taken to mean any composition containing milk ingredients.

The term "milk ingredients" as used throughout the present specification and the appended claims shall be taken to mean any ingredient which are present in or which may be derived from any kind of milk, such as for example cow's milk, ewe's milk, and goat's milk. The term "milk ingredients" may thus comprise milk carbohydrates, such as lactose, milk proteins, such as cassein, milk fats, such as palmitic acid and lecithin, salts and ions, such as calcium ions, and vitamins, such as vitamin A and D, and any derivatives thereof. The milk ingredients may be provided by cream, whole milk, partially skimmed milk, skimmed milk, reconstituted non-fat dairy milk, cream powder, whole milk powder, partially skimmed milk powder and skimmed milk powder and/or combinations thereof as described above.

In a further embodiment, the present invention provides a method for manufacturing a cultured dairy product containing exogenously added protein which method comprises the steps of
i) hydrating a protein source by subjecting it to shear forces, and if necessary to heat, in the presence of excess of water,
ii) adding the hydrated protein source from step i) to a milk composition,
iii) adding a fermentation culture to the mixture from step ii), and
iv) fermenting to obtain a cultured dairy product, and
v) cooling the fermented product to a temperature of about 5°C or below for intermediate storage and packing.

In a still further embodiment, the present invention provides a method for manufacturing a cultured dairy product containing exogenously added protein which method comprises the steps of
i) hydrating a protein source by subjecting it to shear forces, and if necessary to heat, in the presence of excess of water,
ii) adding the hydrated protein source from step i) to a milk composition,
iii) adding a fermentation culture to the mixture from step ii), and
iv) fermenting to obtain a cultured dairy product, and
v) cooling the fermented product and optionally adding flavourings and/or preservatives and finally cooling the fermented product to a temperature of about 5°C or below for intermediate storage and packing.

### DETAILED DESCRIPTION OF THE INVENTION

The protein source in step i) of a method according to the present invention is hydrated prior to addition to the milk composition in step ii). In nature, proteins are curled together and therefore vulnerable to both pH and interaction with ions such as calcium ions and will have a lower solubility in water based systems. To avoid this, the proteins in the protein source are hydrated according to step i) of a method according to the present invention as hydrating the proteins causes the proteins to be stabilized by forcing a lot of water molecules around and in between the protein molecules and side chains thereof. Without wishing to be bound by any specific theory it believed that this makes them less vulnerable to pH and interactions with ions such as calcium ions.

An excess of water in step i) is generally obtained when the water amounts to at least about 75 weight percent of the combined water and protein source. It is doubtful whether it is practical to operate with lower amounts of water as the viscosity becomes very high if water is present in an amount lower than about 75 weight percent. Hydration may also only be partial using an amount of water lower than about 75 weight percent. Preferably, water is present in an amount of about 80 to about 85 weight percent of the combined water and protein source.

In a specific embodiment of the present invention part of the water for use in step i) of a method according to the present invention is provided by soy milk. Soy milk in itself contains significant amounts of water and, naturally, the amount of used soy milk should be chosen so that the combined amount of water present in the combination of protein source, water and soy milk is sufficient to ensure hydration of the proteins present therein. Up to about 55 weight percent of the water for use in step i) of a method according to the present invention may be provided by soy milk. However, it is preferred that up to about 20 weight percent of the water is provided by soy milk. This has no particular effect on the texture of the cultured dairy product.

A combined water and protein source may be used as a ready-made combination or a naturally occurring combination or may be prepared at any point up to the hydration in step i). When the combined water and protein source is prepared prior to step i), the preparation may take place by use of any method known in the art. For instance a protein source for use in step i) of a method according to the present invention may be mixed with water by adding the protein source directly to the water and suspending or dispersing it therein or vice versa. If the water is not ionized water and has a high content of calcium ions, a certain amount of water soluble calcium ion binders, such as sodium or potassium citrate, sodium or potassium phosphate, or sodium or potassium hexametaphosphate, or a combination of these, should be added to and dissolved in the water prior to the actual contact with the protein source to bind free calcium ions present in the water as known in the art.

The combined water and protein source is then subjected to shear forces according to step i) of a method according to the present invention. The shear forces may be applied by using for instance colloid mills, high shear pump heads, high shear mixers, or a homogenizer. The use of a homogenizer is preferred. When using colloid mills, the gap between rotor and stator should preferably be less than 0.1 mm, and when using a homogenizer, the pressure should be at least about 200 bar, for example 250 bar or 300 bar. This corresponds to very high shear rates, preferably at least about 4·10⁷ s⁻¹ when using a homogenizer.

Preferably, the combined water and protein source is heated to a temperature above room temperature, more preferred to a temperature of at least 80°C, prior to and/or during the application of shear forces in step i). The combined water and protein source is preferably heated in a vessel suitable for heating. When the combined water and protein source is prepared prior to this optional heating step, the preparation thereof is preferably performed in the heating vessel making a transfer step superfluous. When the combined water and protein source is heated to a temperature of at least 80°C, the heating preferably takes place for no more than about 10 minutes as undesired reactions might result from a longer heating of the combined water and protein source at this temperature. When the combined water and protein source is prepared prior to the heating step, it is preferred to use warm water to minimize the heating time required in step i). The water could for instance have an initial temperature in the range of 50 to 60°C when being mixed with the protein source and then the actual heating at a temperature of for instance 80°C need only take place for about 1 to about 2 minutes.

The combined water and protein source is preferably heated as described above by use of a heat exchanger and then pumped directly to the shearing means at this temperature. The use of a heat exchanger is practical and fast technology suitable for changing the temperature of a liquid. It normally works as a continuous in-line unit operation in a production process. More preferably, a heat exchanger is used to increase the temperature the combined water and protein source, as described above, which is then pumped directly through a homogenizer at this temperature. These operations should be done as fast as unwanted reactions might occur during longer processing times and it is definitely also more economical.

The now hydrated protein source is then mixed with a milk composition in step ii) of a method according to the present invention, preferably under thorough stirring. If the hydrated protein source has a temperature above 60°C, it may be cooled to a temperature of about 50 to 60°C as rapidly as possible before being mixed with a milk composition in step ii). This cooling is preferably achieved by use of a heat exchanger.

A milk composition for use in a method according to the present invention is preferably prepared as follows: Water or milk or a combination thereof is admixed with a water soluble calcium ion binder, such as sodium or potassium citrate, sodium or potassium phosphate, or sodium or potassium hexametaphosphate, or a combination of these, as described previously, which is subsequently dissolved. Any powdery ingredients, such as skimmed milk powder, are added, and the mixture is stirred vigorously until the powder is dispersed and the mixture is homogenous. However, a milk composition for use in step ii) of a method according to the present invention may be prepared in any way known in the art.

Preferably, the mixture obtained from step ii) is heated in a vessel suitable for heating prior to step iii) of a method according to the present invention to achieve pasteurization and coagulation of proteolytic enzymes. This heating may preferably be obtained in the temperature range from about 75°C to about 95°C, to ensure a complete pasteurization and inactivation of all possible proteolytic enzyme activity. The heating of the resultant mixture from step ii) preferably takes place at about 85°C for about 30 minutes, more preferred at from about 90°C to about 92°C for about 10 minutes, and most preferred at about 90°C for about 2 or about 3 minutes. The heating of the resultant mixture may begin while the milk composition and the hydrated protein source are being mixed, in which case the actual heating of the mixture at the aforementioned temperature should take place for a shorter time period. This heating is preferably achieved by use of a suitable heat exchanger.

The temperature of the mixture of step ii), whether or not the combined water and protein source has been heated prior to or during the application of the shear forces or not, or whether the resulting mixture from step ii) has been heated as described in the previous paragraph or not, is then brought to a temperature suitable for fermentation either by heating or by cooling whichever is appropriate.

When the temperature, which for each individual case is deemed optimal for the fermentation, is reached, a fermentation culture is added and the fermentation starts. The appropriately cooled or heated mixture as described in the previous paragraph, may be fermented by use of any method of fermentation, which is known in the art, and the culture used for fermentation in a method according to the present invention may be any type of culture known in the art for use in fermentation to production of cultured dairy products or a combination of two or more such types, for instance the standard cultures used for fermentation to production of milk yoghurts, such as a combination of *Lactobacillus bulgaricus* and *Streptococcus thermophilius,* for instance YC180, YC 380, YC 460, YC 470, YT 10 and/or CH1 (all from Chr. Hansen, Hørsholm DK) and/or MYE 98, MYO 87, BY 118TG, B3 (all from Rhodia Texel, Manchester, GB). The fermentation culture may for instance be added to the resulting mixture from step ii) in an amount of from about 0.01 weight percent to about 0.05 weight percent of the cultured dairy product. Preliminary trials showed that the strains from Rhodia Texel fermented the mixture at a slower rate than the strains from Chr. Hansen. The Rhodia Texel strains were subsequently not used for the experiments according to the present invention. Among the strains from Chr. Hansen, this study found CH1 to be well suited for the purpose of the present invention.

The fermentation culture is preferably added under stirring. When the fermentation culture has been added, the fermentation begins. For a normal fermentation of milk the fermentation temperature should be around 42-44°C. Preliminary trials showed that fermenting according to the present invention at a temperature of about 44°C provided for a faster fermentation and a larger production of lactic acid compared with other temperatures. It seems like fermenting at about 44°C is advantageous when fermenting a fermentation mixture with a high amount of protein according to the present invention, most liekly since this temperature is more optimal for *Streptococcus thermophilius*. Accordingly, the fermentation according to the present invention preferably takes place at a temperature of about 44°C.

The mixture of step iii) should contain as little oxygen as possible before fermentation as all lactic bacteria are microaerophile. This means that the bacteria like even small amounts of oxygen. The oxygen content of the mixture of step iii) is kept as low as possible by restricting the amount of air, which is allowed to be absorbed into the mixture during the first steps of the process. Furthermore heating the resulting mixture of step ii) prior to the fermentation as described previously reduces the viscosity, which will make much of the dissolved oxygen disappear from the mixture. If there is still too much oxygen trapped in the mixture, vacuum is applied for a short period of time just before the mixture is brought to the fermentation temperature or just before the addition of the fermentation culture.

The temperature of the fermentation mixture is kept constant preferably by use of a thermostat and fermentation is stopped, preferably after no more than 6 hours although longer fermentation times, such as 10 or 20 hours, can be envisioned. A shorter fermentation time (preferably about 5.5 hours) is nevertheless more preferred as a longer fermentation time, among others, will increase the possibility of invasion of other types of bacteria. Furthermore, a longer fermentation period may increase the proteolytic effect of the bacteria which means that the protein chains of the exogenously added proteins will break up to form peptides, which, at least in case of the exogenously added proteins being provided by soy proteins, taste bitter.

In an alternative embodiment of the present invention the fermentation takes place at about 28-30°C and the fermentation time is in the order of 20-24 hours.

A fermented product is in some instances found to contain white spots due to precipitation of cassein and to have a grainy texture. To avoid such problems, the product may be led through a homogenizer at a pressure up to 100 bar, preferably from about 30 to about 40 bar, which results in a product with a smoother and less viscous texture and without any particles which could be felt in the mouth, especially when agar-agar, pectin and/or gum arabic is present in the cultured dairy product as described previously. Alternative types of suitable process technology can for instance be filter systems such as a steel mesh with small apertures, which the fermented product can be passed through.

After the fermentation the fermentation vessel is optionally cooled immediately, for instance by the use of cold water, until the fermented product reaches a temperature of about 5°C or below for storage.

Jams, fruit concentrates, flavouring, preservatives and/or other additives may be added to the cultured dairy product at any time after the fermentation or, if need be, before or during the fermentation. If such an addition is to take place, the fermented product in step iv) is preferably cooled to a temperature of about 10 to 12°C at which temperature the addition of the jams and/or fruit concentrates takes place.

A cultured dairy product according to the present invention preferably contains exogenously added, hydrated protein in an amount of from about 5 weight percent to about 25 weight percent, such as from about 6 weight percent to about 15 weight percent, for example from about 7 weight percent to about 12 weight percent of the cultured dairy product.

Examples of exogenously added, hydrated proteins in the context of the present invention are vegetable proteins, such as soy proteins, and animal proteins. The exogenously added protein is preferably non-dairy protein and more preferably soy protein. The soy protein is preferably provided by isolated soy protein, soy protein concentrate, soy flour or the like or any combination thereof. The soy protein is preferably provided by isolated soy protein.

A cultured dairy product according to the present invention may additionally contain exogenously added dietary fibres. Examples of dietary fibres comprised in a cultured dairy product according to the present invention include fibres from apples, oats, and soybeans. The dietary fibres are preferably provided by soybean fibres, and more preferably by soy cotyledon fibres. The dietary fibres is preferably present in an amount of from 0 to about 40 weight percent based on the weight of the exogenously added protein.

A preferred cultured dairy product according to the present invention has a content of exogenously added protein of about 9 weight percent and a content of exogenously added dietary fibres of about 2.25 weight percent.

A cultured dairy product according to the present invention may additionally contain a calcium ion binder such as for example a salt selected from the group comprising sodium or potassium citrate, sodium or potassium phosphate, or sodium or potassium hexametaphosphate, or a combination of these, whereof sodium hexametaphosphate is most preferred. A calcium ion binder is preferably present in a cultured dairy product according to the present invention in an amount of from 0 to about 0.2 weight percent. When the calcium ion binder is sodium or potassium hexametaphosphate, it is preferably present in an amount of from 0 to about 0.15 weight percent, and more preferably from about 0.08 to about 0.10 weight percent of the cultured dairy product.

A cultured dairy product according to the present invention may furthermore contain a fat source such as lecithin for example soy lecithin. When soy lecithin is present in a cultured dairy product according to the present invention it is preferably present in an amount of from about 0.1 to about 1 weight percent, such as about 0.6 weight percent of the cultured dairy product. A cultured dairy product according to the present invention may furthermore contain a thickening agent such as agar-agar, gum arabic or pectin, or any combination thereof, preferably a combination of agar-agar and pectin. The pectin is preferably a mixture of amidated low ester and high ester pectin, such as GENU® pectin type LM-107 AS-YA. When gum arabic and/or pectin is present in a cultured dairy product according to the present invention, each should be present in an amount of from about 0.08 to about 1.0 weight percent, preferably about 0.25 weight percent of the cultured dairy product, and when agar-agar is present, it should be present in an amount of from about 0.005 to about 0.15 weight percent, preferably about 0.06 weight percent.

A cultured dairy product according to the present invention may furthermore contain soy milk. Preferably, a cultured dairy product according to the present invention may contain up to 35 weight percent soy milk.

A cultured dairy product according to the present invention or prepared by a method according to the present invention also has an increased acidity contributing to a fresh taste. The acidity of a cultured dairy product prepared by a method according to the present invention may be increased with up to 40 to 50% compared to the acidity of cultured dairy products, which are known in the art.

### EXAMPLE 1

### Preparation of a cultured dairy product containing exogenously added soy protein 1

A cultured dairy product is prepared using the following ingredients:

| **Protein source** | **Weight percent of cultured dairy product** |
|---|---|
| Isolated soy protein, SUPRO® PLUS 161 | 10.66 |
| Soy cotyledon fibres, FIBRIM® 1020 | 2.67 |
| Soy lecithin Epikuron 100SP* | 0.76 |

| **Water** | |
|---|---|
| Distilled water | 64.17 |

| **Milk composition** | |
|---|---|
| Skimmed milk | 16.61 |
| Skimmed milk powder | 3.99 |
| Distilled water | 0.72 |
| Calgon® | 0.087 |
| Pectin LM-107 AS-YA | 0.250 |
| Agar-agar | 0.063 |

| **Fermentation culture** | |
|---|---|
| CH1 | 0.03 |
| **Sum** | **100** |

| | |
|---|---|
| * = supplied by Lucas Meyer, Hamburg, Germany | |

The protein source is dispersed in distilled water having a temperature of 50°C and the dispersion is heated to 82°C and homogenised at 300 bar. In the meantime, the milk composition is prepared by dissolving Calgon® in milk/water and then adding skimmed milk powder along with pectin and agar-agar. The homogenized dispersion and the milk composition is mixed and heated to a temperature of 90°C for 5 minutes, cooled to 43°C and inoculated with the fermentation culture, CH1 (Chr. Hansen). The fermentation proceeds for 5.5 hours and then the fermented mixture is homogenized at 30 bar, filled into small aseptic jars (0.5-1 I) and cooled to 4-5°C.

A cultured dairy product prepared according to this example contains isolated soy protein in an amount of about 10.7 weight percent corresponding to an amount of exogenously added soy protein of about 9.3 weight percent. When the amount of soy protein provided by the soy fibre product is included, the cultured dairy product contains exogenously added soy protein in an amount of about 9.6 weight percent.

The content of the final fruited product is as follows:

| **Content** | per 100 g |
|---|---|
| Cultured dairy product | 83 g |
| Fruit | 10 g |
| Sugar | 7 g |

| **Sum** | 100 g |
|---|---|
| | |

This fruited cultured dairy product contains isolated soy protein in an amount of 8.9 weight percent corresponding to an amount of exogenously added soy protein of about 7.7 weight percent. When the amount of soy protein provided by the soy fibre product is included, the fruited cultured dairy product contains exogenously added soy protein in an amount of about 8.0 weight percent.

The cultured dairy product appears like yoghurt and has no soy odour and a smooth texture without powdery mouthfeel.

### EXAMPLE 2

### Preparation of cultured dairy product containing exogenously added soy protein 2

The protein source comprises the following:

| **Protein source** | **kg** |
|---|---|
| Isolated soy protein, SUPRO® PLUS 159 | 69.021 |
| Soy cotyledon fibres, FIBRIM® 2000 | 16.824 |
| Soy lecithin Epikuron 100SP | 4.906 |

The ingredients of the protein source are mixed and the thus produced protein source is dispersed in 424.5 kg of water with a temperature of about 50°C supplemented with 47.56 g of potassium citrate (1xH₂O) until a suitable thick consistency is obtained. The combined water and protein source is transferred to a vessel suitable for heating equipped with a stirring means and is heated to a temperature of about 80°C to 82°C under stirring. The mixture is held at this temperature for about 2 to 3 minutes. The warm mixture is then pumped through a homogenizer at a pressure of at least 300 bar and collected in a plast container as a hydrated protein source. In the meantime, a milk composition is prepared.

The ingredients of the milk composition are as follows:

| **Milk composition** | **kg** |
|---|---|
| Skimmed milk | 94.5 |
| Skimmed milk powder | 22.58 |
| Potassium citrate (1xH₂O) | 1.13 |
| Gum arabic | 1.535 |
| Agar-agar | 0.245 |
| Water | 7.23 |

The milk composition is prepared as five 1/5 milk compositions. The ingredients of a 1/5 milk composition are summarized below.

| **1/5 milk composition** | **kg** |
|---|---|
| Skimmed milk | 18.9 |
| Skimmed milk powder | 4.516 |
| Potassium citrate (1xH₂O) | 0.226 |
| Water | 1.446 |
| Gum arabic | 0.307 |
| Agar-agar | 0.049 |

Each 1/5 milk composition is prepared by first adding the skimmed milk to the water and then dissolving the potassium citrate in the milk/water mixture. Then the rest of the ingredients are added under thorough stirring until complete dispersion is obtained and the mixture is homogenous.

1/5 milk composition is added to 97.5 kg of the hydrated protein source (corresponding to approximately 1/5 of the total amount) prepared as described above in a heating vessel equipped with stirring means under stirring until the mixing is complete and the mixture is heated to about 85°C. This heating already begins under the mixing of the components. The mixture is kept at about 85°C for 7 minutes and then transferred to a fermentation vessel for cooling to 44°C under stirring. This procedure is repeated four times, each time with about 97.5 kg of the hydrated protein source and 1/5 milk composition and every time leading the resulting mixture to the same fermentation vessel as above for cooling under stirring.

When the temperature of the content of the fermentation vessel has reached 44°C, 185 g of the inoculating culture, CH1, is added. When CH1 has been thoroughly admixed, the stirring is stopped and the fermentation begins. The temperature of the fermentation mixture is held constant at 44°C by use of a thermostat. After 5.5 hours the heating is stopped and the fermentation vessel is cooled overnight by use of cold tap water under gentle stirring of the cultured dairy product.

This procedure affords 615.3 kg of cultured dairy product containing isolated soy protein in an amount of about 11.2 weight percent corresponding to an amount of exogenously added soy protein of about 9.0 weight percent. When the amount of soy protein provided by the soy fibre product is included, the cultured dairy product contains exogenously added soy protein in an amount of about 9.3 weight percent.

Flavourings (0.37 kg of vanilla cream and 0.25 kg of sugar simula) are added to the cultured dairy product along with 154.1 kg of jam containing sugar and malic acid. The final product is then filled into beakers of appropriate size, which are sealed.

The content of the final flavoured cultured dairy product is as follows:

| **Content** | Per 100 g |
|---|---|
| Cultured dairy product | 79.91 g |
| Jam including sugar | 19.46 g |
| Malic acid* | 0.55 g |
| Flavourings | 0.08 g |

| **Sum** | 100.00 g |
|---|---|
| | |

| | |
|---|---|
| * malic acid is added to the cultured dairy product as part of the jam component | |

This flavoured cultured dairy product contains isolated soy protein in an amount of about 9.0 weight percent corresponding to an amount of exogenously added soy protein of about 7.2 weight percent. When the amount of soy protein provided by the soy fibre product is included, the flavoured cultured dairy product contains exogenously added soy protein in an amount of about 7.5 weight percent.

The cultured dairy product appears like yoghurt and has no soy odour and a smooth texture without powdery mouthfeel.

### EXAMPLE 3

### Preparation of a cultured dairy product containing exogenously added soy protein and soy milk

A cultured dairy product is prepared using the following ingredients:

| **Protein source** | **Weight percent of cultured dairy product** |
|---|---|
| Isolated soy protein, SUPRO® PLUS 161 | 10.663 |
| Soy cotyledon fibres, FIBRIM® 1020 | 2.666 |
| Soy lecithin Epikuron 100SP | 0.756 |
| Soy milk | 12.83 |

| **Water** | |
|---|---|
| Distilled water | 51.333 |

| **Milk composition** | |
|---|---|
| Skimmed milk | 16.611 |
| Skimmed milk powder | 3.988 |
| Distilled water | 0.721 |
| Calgon® | 0.087 |
| Pectin LM-107 AS-YA | 0.250 |
| Agar-agar | 0.063 |

| **Fermentation culture** | |
|---|---|
| CH1 | 0.03 |

| **Sum** | **100** |
|---|---|
| | |

A mixture of soy milk and water is prepared and the protein source is dispersed therein. The dispersion is heated to 82°C and homogenised at 300 bar. In the meantime, the milk composition is prepared by dissolving Calgon® in milk/water and then adding skimmed milk powder along with pectin and agar-agar. The homogenized dispersion and the milk composition is mixed and heated to a temperature of 72°C for 15 seconds, cooled to 43°C, inoculated with the fermentation culture, and fermented for 6 hours.

A cultured dairy product prepared according to this example contains isolated soy protein in an amount of about 10.7 weight percent corresponding to an amount of exogenously added soy protein of about 9.3 weight percent. When the amount of soy protein provided by the soy fibre product is included, the cultured dairy product contains exogenously added soy protein in an amount of about 9.6 weight percent. The protein contribution form the soy milk is not included.

The pH is 4.67 and the amount of lactic acid is 1.37 weight percent after 6 hours of fermentation. The cultured dairy product is homogenised at 30 bar after cooling overnight and after homogenizing, the pH and the amount of lactic acid is measured again: pH = 4.43 and lactic acid 1.71%. A similar batch made without soy milk has the same pH and 1.63% lactic acid, implying that the buffer capacity is larger in cultured dairy products containing some soy milk. The cultured dairy product containing soy milk appears like yoghurt and has no soy odour and a smooth texture without powdery mouthfeel. It is slightly more acidous than the cultured dairy product without soy milk.

### EXAMPLE 4

### Preparation of cultured dairy products without homogenization

Cultured dairy products are prepared using the following ingredients, one batch using Pectin YA100 and another batch using Pectin LM-106 ASYA.

| **Protein source** | **Weight percent of cultured dairy product** |
|---|---|
| Isolated soy protein, SUPRO® PLUS 161 | 10.56 |
| Soy cotyledon fibres, FIBRIM® 1020 | 2.65 |
| Soy lecithin Epikuron 100SP | 0.75 |

| **Water** | |
|---|---|
| Distilled water | 65.27 |

| **Milk composition** | |
|---|---|
| Skimmed milk | 15.42 |
| Skimmed milk powder | 3.67 |
| Calgon® | 0.06 |
| Pectin YA100*/Pectin LM-106 ASYA | 0.08 |
| Water | 1.5 |

| **Fermentation culture** | |
|---|---|
| CH1 | 0.03 |

| **Sum** | **100** |
|---|---|
| | |

| | |
|---|---|
| * = also obtainable from Hercules | |

The milk components are weighed and mixed the night before and chilled overnight. The cold ionized water is put in a Stefan mixer and the protein source is added. A Stefan mixer is a batch mixer comprising a slow going stirring means along the sides and a chopper, i.e. a fast going stirring means applying high shear forces. The Stefan mixer is started slowly at 750 rpm and then high speed is used for 30 seconds. The bowl is opened and inspected and any bits are scraped into the liquid. Mixing is performed at 750 rpm with baffle and jacket heat is applied up to 80°C. Mixing is continued at 3000 rpm at 80°C. Milk is added through a funnel to the core and high speed is continued after all the milk is added for a total heating time of 30 minutes. The mixture is cooled to 46°C and fermented with CH1 to pH 4.3. The cultured dairy product is homogenised at 30 bar and filed into 500 ml pots and chilled.

Both batches are treated by use of this method. Small samples are taken from the 80°C heating stage and examined for texture. After 10 and 20 minutes, the texture is smooth. Incubation is slower than expected, but 46°C might be too high for CH-1.

A cultured dairy product prepared according to this example contains isolated soy protein in an amount of about 10.6 weight percent corresponding to an amount of exogenously added soy protein of about 9.2 weight percent. When the amount of soy protein provided by the soy fibre product is included, the cultured dairy product contains exogenously added soy protein in an amount of about 9.5 weight percent.

The cultured dairy product appears like yoghurt and has no soy odour and a smooth texture without powdery mouthfeel.

### EXAMPLE 5

### Comparing the use of colloid mill to the use of a homogenizer

Two different batches are prepared, both with the following composition:

| **Protein source** | **Weight percent of cultured dairy product** |
|---|---|
| Isolated soy protein, SUPRO® PLUS 159 | 10.82 |
| Soy cotyledon fibres, FIBRIM® 2000 | 2.71 |
| Soy lecithin Epikuron 100SP | 0.77 |

| **Water** | |
|---|---|
| Distilled water | 60.68 |

| **Milk composition** | |
|---|---|
| Skimmed milk | 22.44 |
| Skimmed milk powder | 2.41 |
| Potassium citrate | 0.15 |

| **Fermentation culture** | |
|---|---|
| CH1 | 0.02 |

| **Sum** | **100** |
|---|---|
| | |

The two batches are used for preparing a cultured dairy product essentially following the procedure in Example 1 with the following exceptions: Batch 1 is homogenized at 300 bar as described in Example 1, while Batch 2 is run through a colloid mill. In addition, Batch 1 is fermented using fermentation culture YC470, while Batch 2 is fermented using fermentation culture CH1.

A cultured dairy product prepared according to this example contains isolated soy protein in an amount of about 10.8 weight percent corresponding to an amount of exogenously added soy protein of about 8.6 weight percent. When the amount of soy protein provided by the soy fibre product is included, the cultured dairy product contains exogenously added soy protein in an amount of about 9.0 weight percent.

The sensory evaluation of the two batches is shown in Table 1.

**TABLE I**

| Batch no. | Appearance | Odour | Flavour | Texture | Mouthfeel |
|---|---|---|---|---|---|
| 1 | Lots of air in product, lots of air bubbles | Acidulous | Acidulous | Thick and creamy, short | Smooth |
| 2 | Glossy and smooth | More acidulous, more "green" | Acidulous | Thinner than Batch 1 | Somewhat more powder than Batch 1 |

In this set-up Batch 1 has the best texture while Batch 2 gives a somewhat powdery mouthfeel. This may be overcome by prolonging the period of time in which the combination of protein source and water is subjected to the shear forces in a colloid mill.

## Claims

**1.** A method for manufacturing a cultured dairy product containing exogenously added protein, which method comprises the steps of
i) hydrating a protein source by subjecting it to shear forces, and if necessary to heat, in the presence of excess of water,
ii) adding the hydrated protein source from step i) to a milk composition,
iii) adding a fermentation culture to the mixture from step ii), and
iv) fermenting to obtain a cultured dairy product.

**2.** A method according to claim 1 wherein the shear forces in step i) are applied by use of a homogenizer, colloid mills, high shear pump heads or high shear mixers.

**3.** A method according to claim 2 wherein said shear forces are applied by use of a homogenizer.

**4.** A method according to claim 3 wherein said shear forces are applied at a pressure of at least about 200 bar.

**5.** A method according to claim 4 wherein the shear rate of the shear forces in step i) is at least about 4·10⁷ s⁻¹.

**6.** A method according to claim any of claims 1 to 5 wherein the water and protein source in step i) is at a temperature above room temperature while being subjected to the shear forces.

**7.** A method according to claim 6 wherein the temperature above room temperature is a temperature above 80°C for a period of time up to 10 minutes.

**9.** A method according to any of claims 1 to 8 wherein the mixture from step ii) is subjected to pasteurization prior to the addition of fermentation culture in step iii).

**10.** A method according to any of claims 1 to 9 wherein the cultured dairy product from step iv) is homogenized at a pressure up to 100 bar.

**11.** A method according to claim 10 wherein cultured dairy product is homogenized at a pressure of from about 30 bar to about 40 bar.

**12.** A method according to any of claims 1 to 11 wherein the amount of protein provided by the protein source for use in step i) is such that the amount of exogenously added protein in the resulting cultured dairy product is at least about 5 weight percent.

**13.** A method according to claim 12 wherein the amount of protein provided by the protein source for use in step i) is such that the amount of exogenously added protein in the resulting cultured dairy product is at least about 7 weight percent.

**14.** A method according to claim 13 wherein the amount of protein provided by the protein source for use in step i) is such that the amount of exogenously added protein in the resulting cultured dairy product is at least about 9 weight percent.

**15.** A method according to any of claims 1 to 14 wherein the protein source for use in step i) additionally comprises dietary fibres.

**16.** A method according to claim 15 wherein the amount of dietary fibres contained in the protein source for use in step i) is from 0 to about 40 weight percent of the amount of protein in said protein source.

**17.** A method according to claim 16 wherein the amount of dietary fibres contained in the protein source for use in step i) is such that the amount of exogenously added dietary fibres in the resulting cultured dairy product is at least about 1 weight percent of said cultured dairy product.

**18.** A method according to any of claims 1 to 11 wherein the amount of protein provided by the protein source for use in step i) is such that the amount of exogenously added protein in the resulting cultured dairy product is about 9 weight percent of the cultured dairy product and wherein the protein source for use in step i) additionally comprises dietary fibres in an amount such that the amount of exogenously added dietary fibres in the resulting cultured dairy product is about 2.25 weight percent of the cultured dairy product.

**19.** A method according to any of claims 15 to 18 wherein some or all of the dietary fibres are provided by soybean fibres.

**20.** A method according to claim 19 wherein the soybean fibres are soy cotyledon fibres.

**21.** A method according to any of claims 1 to 20 wherein some or all of the exogenously added protein is soy protein.

**22.** A method according to claim 21 wherein the soy protein is provided by isolated soy protein, soy protein concentrate and/or soy flour.

**23.** A method according to claim 22 wherein the soy protein is provided by isolated soy protein.

**24.** A method according to any of claims 1 to 23 wherein the protein source in step i) additionally comprises one or more fat sources.

**25.** A method according to claim 24 wherein one or more of the fat sources is a lecithin.

**26.** A method according to claim 25 wherein one or more of the fat sources is soy lecithin.

**27.** A method according to claim 26 wherein said soy lecithin is present in an amount of from about 0.5 to about 10 weight percent of the total protein source.

**28.** A method according to claim 27 wherein said soy lecithin is present in an amount of from about 2.5 to about 6 weight percent of the total protein source.

**29.** A method according to any of claims 1 to 28 wherein part of the water for use in step i) is provided by soy milk.

**30.** A method according to claim 29 wherein up to 55 weight percent of the water for use in step i) is provided by soy milk.

**31.** A method according to claim 30 wherein up to 20 weight percent of the water for use in step i) is provided by soy milk.

**32.** A method according to any of claims 1 to 31 wherein the milk composition for use in step ii) comprises a combination of two or more parts, of which a first part is selected from the group comprising cream, whole milk, partially skimmed milk, skimmed milk and reconstituted non-fat dairy milk and a second part is selected from the group comprising cream powder, whole milk powder, partially skimmed milk powder and skimmed milk powder.

**33.** A method according to claim 32 wherein the milk composition comprises a combination of skimmed milk and skimmed milk powder.

**34.** A method according to any of claims 1 to 33 wherein the milk composition for use in step ii) contains milk ingredients in an amount sufficient to ensure that the resulting cultured dairy product contains at least about 5 g of milk ingredients (dry matter) per 100 g.

**35.** A method according to any of claims 1 to 34 wherein the mixture to be fermented in step iv) contains agar-agar, gum arabic, a mixture of amidated low ester and high ester pectin or any combination thereof.

**36.** A method according to claim 35 wherein said agar-agar, said gum arabic, said mixture of amidated low ester and high ester pectin or any combination thereof is present in the milk composition for use in step ii).

**37.** A method according to any of claims 1 to 36 wherein a calcium ion binder is present in the milk composition for use in step ii).

**38.** A method according to claim 37 wherein the calcium ion binder is selected from the group comprising sodium or potassium citrate, sodium or potassium phosphate, or sodium or potassium hexametaphosphate, or a combination thereof.

**39.** A method according to claim 38 wherein the amount of calcium ion binder in the milk composition is such that the amount of calcium ion binder in the resulting cultured dairy product is from 0 to about 0.2 weight percent.

**40.** A method according to claim 39 wherein the calcium ion binder is sodium hexametaphosphate.

**41.** A method according to claim 40 wherein the amount of calcium ion binder in the milk composition is such that the amount of calcium ion binder in the resulting cultured dairy product is from 0 to about 0.15 weight percent.

**42.** A method according to claim 41 wherein the amount of calcium ion binder in the milk composition is such that the amount of calcium ion binder in the resulting cultured dairy product is from about 0.08 to about 0.10 weight percent.

**43.** A method according to any of claims 1 to 42 wherein the resulting cultured dairy product is a yoghurt or a yoghurt-like product.

**44.** A method according to any of claims 1 to 43 comprising an additional step following step iv) of cooling the fermented product to a temperature of about 10°C and adding jams, fruit concentrates, flavourings and/or preservatives to said cooled product.

**45.** A method according to any of claims 1 to 44 comprising a final step of cooling the fermented product to a temperature of about 5°C or below for intermediate storage and packing.

**46.** A cultured dairy product having a smooth texture and comprising exogenously added, completely hydrated protein in an amount of from about 5 to about 25 weight percent of said cultured dairy product.

**47.** A cultured dairy product according to claim 46 in which the exogenously added protein is present in an amount of from about 6 to about 15 weight percent of said cultured dairy product.

**48.** A cultured dairy product according to claim 47 in which the exogenously added protein is present in an amount of from about 7 to about 12 weight percent of said cultured dairy product.

**49.** A cultured dairy product according to any of claims 46 to 48, which additionally contains exogenously added dietary fibres.

**50.** A cultured dairy product according to claim 49 in which said dietary fibres is present in an amount up to 40 weight percent of the amount of exogenously added protein.

**51.** A cultured dairy product according to claim 50 in which the amount of exogenously added dietary fibres is at least 1 weight percent of the cultured dairy product.

**52.** A cultured dairy product according to claim 46 in which the amount of exogenously added protein is about 9 weight percent of the cultured dairy product and which additionally contains exogenously added dietary fibres in an amount of about 2.25 weight percent of the cultured dairy product.

**53.** A cultured dairy product according to any of claims 46 to 52 in which the dietary fibres are provided by soybean fibres.

**54.** A cultured dairy product according to claim 53 in which the soybean fibres are soy cotyledon fibres.

**55.** A cultured dairy product according to any of claims 46 to 54, which additionally comprises one or more fat sources.

**56.** A cultured dairy product according to claim 55 in which one or more of the fat sources is a lecithin.

**57.** A cultured dairy product according to claim 56 in which one or more of the fat sources is soy lecithin.

**58.** A cultured dairy product according to claim 57 in which the soy lecithin is present in an amount of from about 0.05 to about 1.5 weight percent of the cultured dairy product.

**59.** A cultured dairy product according to claim 58 in which the soy lecithin is present in an amount of from about 0.35 to about 0.9 weight percent of the cultured dairy product.

**60.** A cultured dairy product according to any of claims 46 to 59 which additionally contains agar-agar, gum arabic, a mixture of amidated low ester and high ester pectin or any combination thereof.

**61.** A cultured dairy product according to any of claims 46 to 60, which additionally contains soy milk.

**62.** A cultured dairy product according to claim 61 in which the soy milk is present in an amount of up to 35 weight percent of the cultured dairy product.

**63.** A cultured dairy product according to any of claims 46 to 62, which additionally contains a calcium ion binder.

**64.** A cultured dairy product according to claim 63 in which the calcium ion binder is selected from the group comprising sodium or potassium citrate, sodium or potassium phosphate, or sodium or potassium hexametaphosphate, or a combination thereof.

**65.** A cultured dairy product according to claim 64 in which the calcium ion binder is present in an amount of from 0 to about 0.2 weight percent of the cultured dairy product.

**66.** A cultured dairy product according to claim 65 in which the calcium ion binder is sodium metahexaphosphate.

**67.** A cultured dairy product according to claim 66 in which the calcium ion binder is present in an amount of from about 0 to about 0.15 weight percent of the cultured dairy product.

**68.** A cultured dairy product according to claim 67 in which the calcium ion binder is present in an amount of from about 0.08 to about 0.10 weight percent of the cultured dairy product.

**69.** A cultured dairy product according to any of claims 46 to 68, which is a yoghurt or a yoghurt-like product.

**70.** A cultured dairy product according to any of claims 46 to 69 in which the exogenously added protein is soy protein.

**71.** A cultured dairy product according to claim 70 in which the soy protein is provided by isolated soy protein, soy protein concentrate and/or soy flour.

**72.** A cultured dairy product according to claim 71 in which the soy protein is provided by isolated soy protein.

**73.** Use of a cultured dairy product according to any of claims 70 to 72 for lowering serum levels of glucose and/or total cholesterol and/or LDL-cholesterol and/or triglycerides and/or homocystein and/or for increasing serum levels of HDL-cholesterol and/or the serum HDL/LDL-cholesterol ratio in a subject.

**74.** A cultured dairy product prepared by a method according to any of claims 1 to 45.
